Europäisches Patentamt

(19) European Patent Office    (11) Numéro de publication: **0 072 834**
Office européen des brevets    **B1**

(12) **FASCICULE DE BREVET EUROPEEN**

(45) Date de publication du fascicule du brevet:
31.07.85

(21) Numéro de dépôt: **82900613.9**

(22) Date de dépôt: **12.02.82**

(86) Numéro de dépôt international:
**PCT/BE 82/00001**

(87) Numéro de publication internationale:
**WO 82/02816 (02.09.82 Gazette 82/21)**

(51) Int. Cl.⁴: **A 01 G 9/24**

(54) **PROCEDE ET INSTALLATION POUR LE REGLAGE DE LA TEMPERATURE DANS UNE SERRE.**

(30) Priorité: **20.02.81 BE 2059021**

(43) Date de publication de la demande:
**02.03.83 Bulletin 83/9**

(45) Mention de la délivrance du brevet:
**31.07.85 Bulletin 85/31**

(84) Etats contractants désignés:
**AT CH DE FR GB LI LU NL**

(56) Documents cités:
**EP - A - 0 012 996**
**CH - A - 338 046**
**DE - A - 2 721 434**
**FR - A - 2 322 532**
**FR - A - 2 374 594**

(73) Titulaire: **DELTA RECHERCHE ET DEVELOPPEMENT,
14, Avenue du Midi, CH-1951 Sion (CH)**

(72) Inventeur: **DOZIER, José J., 8, avenue des Pervenches,
B-6110 Montigny-Le-Tilleul (BE)**

(74) Mandataire: **Donné, Eddy, M.F.J.Bockstael
Arenbergstraat 13, B-2000 Anvers (BE)**

BUNDESDRUCKEREI BERLIN

## Description

La présente invention concerne un procédé et une installation pour le réglage de la température dans une serre.

L'obtention et le maintien de conditions climatiques favorables dans une serre ont fait l'objet de nombreuse études et expériences. Parmi les nombreuses difficultés rencontrées, l'une des plus ardues est celle du refroidissement de la serre lorsque la température risque de s'élever au-dessus d'une valeur limite, fonction de la culture pratiquée. Sans précautions particulières, la température à l'intérieur d'une serre peut en effet s'élever très rapidement sous l'effet des radiations solaires et entraîner la destruction des plantes. Pour cette raison, les serres ont été généralement équipées de dispositifs d'aération (ouvrants), de voiles d'ombrage et d'installations de ventilation forcée. Ces dernières consistent en un dispositif destiné à envoyer, dans la partie basse de la serre ou zone de culture, un courant d'air de grande section, ce courant traversant un rideau d'eau à l'entrée de la serre.

Le demandeur a constaté que de telles installations présentaient de nombreux désavantages, dont entre autres celui de soumettre les plantes, particulièrement celles situées à proximité de la soufflerie, à un abaissement relativement brutal de température, ainsi que de provoquer une évaporation importante, ce qui est néfaste à leur développement.

Par ailleurs, l'utilisation prolongée de voiles d'ombrage et similaires est également défavorable en ce qu'elle limite considérablement la quantité et la nature des rayonnements nécessaires à une culture intensive.

Les problèmes évoqués ci-dessus se compliquent encore du fait du coût actuel de l'énergie qui est devenu un facteur primordial dans le choix des solutions.

Le brevet CH-A-338 046 décrit une serre munie d'une ventilation dans la partie haute de la serre, ainsi que d'une ventilation près du sol. Les deux ventilations peuvent opérer indépendamment, et sont alimentées par de l'air venant de l'extérieur au niveau du sol. Les inconvénients du procédé sont qu'il n'y a pas d'accumulation de la chaleur récupérée, et la surpression augmente les déperditions par perméabilité.

Dans le brevet EP-A-0 012 996 est décrit une serre constituée d'une double paroi. De l'air extérieur ou intérieur circule de bas en haut entre les parois ensoleillées. L'air est extrait par une gaine haute et un ventilateur, et traverse un échangeur air-eau. Les inconvénients du procédé consistent en la double paroi qui est une réalisation coûteuse qui limite la transmission lumineuse.

Le but de l'invention est de fournir un procédé nouveau de réglage de la température dans une serre, moins coûteux à l'exploitation.

Conformément à l'invention, le procédé de réglage de la température dans une serre par insufflation d'air refroidi dans la partie haute de la serre, c.-à-d. la partie élevée du volume intérieur de la serre qui couvre la zone de culture, en cas de surchauffe et par chauffage de la partie basse de la serre, en cas de refroidissement de cette dernière, est caractérisé en ce qu'il consiste, en cas de surchauffe, à aspirer l'air chaud situé dans la dite partie haute de la serre; à refroidir cet air à l'aide d'une pompe de chaleur, à une température inférieure de 8 à 15°C à sa température initiale; à renvoyer cet air refroidi, éventuellement additionné d'air frais, dans la même partie haute de la serre vers le faîte de cette dernière d'où il a été aspiré afin de ne pas perturber sa partie basse, tandis que pour le réchauffage on utilise les calories récupérées par la pompe de chaleur et stockées dans au moins un circuit de chauffage à basse température prévu à cet effet dans la serre.

L'effet du procédé de l'invention, est la création d'une zone tampon dans la partie haute de la serre en y insufflant de l'air à une température inférieure à celle de ladite valeur déterminée, dès que la température atteint une valeur déterminée dans un ou plusieurs points choisis de la serre.

L'installation pour la mise en oeuvre du procédé selon l'invention du type comprenant un dispositif d'insufflation d'air situé ou aboutissant dans le faîte de la partie haute de la serre telle que définie cédessus; un moyen d'aspiration de l'air aspirant éventuellement l'air de l'extérieur; un circuit de chauffage à basse température chauffant la partie basse (2) de la serre; et un dispositif de réglage auquel peut être asservi ledit dispositif d'insufflation en fonction au moins de la température dans la serre, est caractérisé en ce qu'elle comprend, en outre des moyens d'aspiration de l'air situé dans ladite partié haute de la serre, un dispositif de refroidissement est une pompe à chaleur air/eau, une brâche à eau étant, prévue pour le stockage de l'eau réchauffée au cours du fonctionnement de ladite pompe, cette bâche étant connectée à tout ou partie du circuit de chauffage et en ce que le dispositif de refroidissement peut être aussi asseroi au dispositif de réglage.

Pour plus de clarté, l'invention est décrite ci-après avec référence aux dessins annexés. dans lesquels:

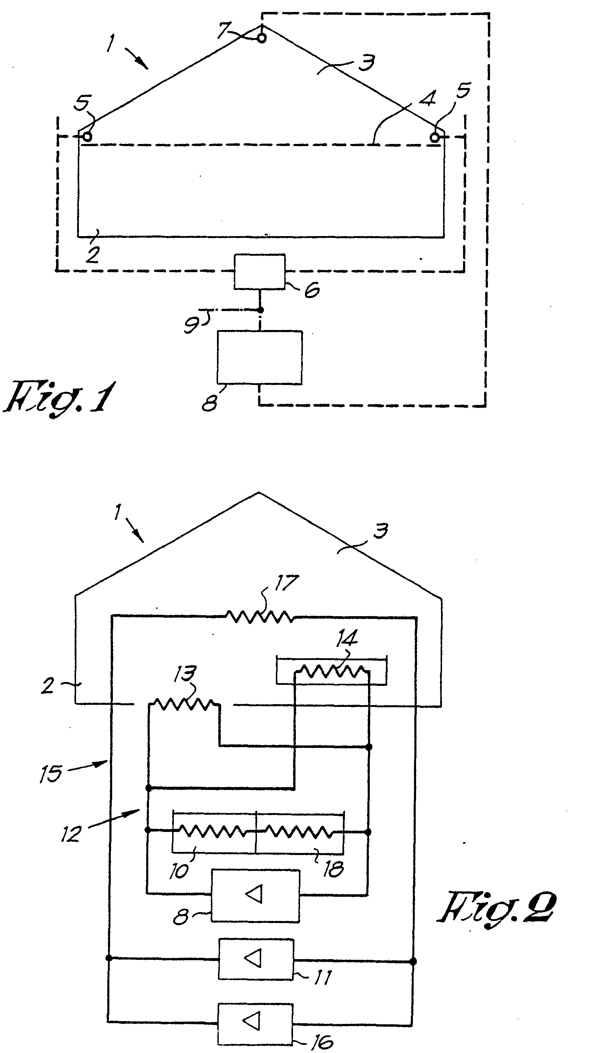

la figure 1 est un schéma du circuit aéraulique d'une serre équipée conformément à l'invention; et la figure 2 est un schéma d'un circuit hydraulique de chauffage, d'une serre équipée selon la figure 1.

Le schéma de la figure 1 représente une serre 1, comportant une zone de culture 2 et une partie haute 3 entre lesquelles peut être déployé un voile d'ombrage 4.

Le procédé selon l'invention consiste donc à créer dans la partie haute 3 une zone tampon en y insufflant de l'air, dès que la température mesurée dans un ou plusieurs points de la serre atteint une valeur préalablement fixée. L'air insufflé doit être à une température inférieure — par exemple de 5 à 15°C — à celle de ladite température fixée.

Pour ce faire, une ou plusieurs gaines 5 sont prévues dans la partie haute 3 de la serre, ces gaines ayant des évents dirigés substantiellement vers le sommet de ladite partie haute.

Ces gaines 5 sont alimentées à partir d'une soufflerie 6.

Pour obtenir l'air à la température requise pour créer une zone tampon dans la partie haute 3, on peut extraire de l'air de cette dernière, par exemple au moyen d'une gaine 7, refroidir cet air à l'aide d'un groupe frigorifique, respectivement une pompe à chaleur, 8 et le renvoyer aux gaines 5.

On peut ainsi avoir un circuit complètement fermé ou encore avoir un circuit mixte, une partie de l'air insufflé étant recyclée et le restant étant de l'air frais, prélevé à l'extérieur, par exemple par la conduite 9, ceci afin de tenir compte des besoins physiologiques des plantes.

Il peut être avantageux de déployer les voiles d'ombrage 4 avant de procéder à l'insufflation d'air, respectivement à la formation de ladite zone tampon, et à les refermer au moins partiellement lorsque cette dernière est bien établie.

Il est souhaitable de mesurer le gradient de température entre au moins deux points respectivement dans la zone de culture 2 et dans la partie haute 3 et de régler l'insufflation de l'air en fonction de ce gradient, selon une loi à déterminer expérimentalement en fonction des paramètres propres à la serre considérée, tels que dimensions et volume intérieur de la serre, isolation thermique et perméabilité à l'air de cette dernière, son implantation, culture envisagée, etc. L'expression »gradient« utilisée ci-dessus doit s'entendre au sens large et n'est pas limitée à une mesure continue entre deux points extrêmes mais couvre également une approximation de cette dernière.

La zone tampon ainsi créée maintient à température sensiblement constante la zone de culture 2, sans que les plantes ne soient soumises à des courants d'air et/ou à de brusques refroidissements.

Le procédé susdécrit et l'installation pour sa mise oeuvre permettent également une gestion thermique très favorable de la serre.

En effet, lors du refroidissement de l'air provenant de la partie haute 3, préalablement à son recyclage, les calories soustraites sont récupérées. Par exemple, si la pompe à chaleur 8 est du type air/eau, l'eau réchauffée peut être envoyée dans une bâche de stockage 10 en vue d'être utilisée ultérieurement pour le chauffage de la serre.

La pompe 8 peut avantageusement être entraînée par un moteur thermique 11 refroidi à l'eau dont on peut également récupérer les calories, ainsi d'ailleurs que des gaz d'échappement et des lubrifiants.

Un schéma de la partie chauffage de l'installation est représenté à la figure 2.

On y remarque un circuit »basse température« 12, alimenté à partir de la pompe 8 et/ou de la bâche 10, et destiné au chauffage du sol 13 et des tablettes de culture 14, respectivement des terres de culture. On y voit également un circuit »haute température« 15, alimenté à partir du moteur thermique 11 (via une bâche non représentée) ainsi que d'une chaudière d'appoint 16, circuit comprenant des tubes radiants 17 suspendus dans la serre.

Le retour du circuit 12 peut être stocké, au moins en partie, dans une bâche 18 pour servir ultérieurement comme eau d'arrosage.

On conprendra aisément de ce qui précède l'intérêt de l'invention, non seulement sur le plan de la culture, mais égalemnt en ce qui concerne la consommation d'énergie.

Il est évident que l'invention peut être mise en oeuvre sous des formes très diverses, sans pour autant sortir du cadre des revendications annexées. Ainsi, le nombre et la disposition des gaines d'insufflation et d'extraction de l'air, le choix du type de pompe à chaleur ou installation frigorifique, le mode de stockage des calories, etc. peuvent varier d'un cas à l'autre, selon les besoins particuliers.

## Revendications

1. Procédé de réglage de la température dans une serre par insufflation d'air refroidi dans la partie haute (3) de la serre, c.-à-d. la partie élevée du volume intérieur de la serre qui couvre la zone de culture, en cas de surchauffe, et par chauffage de la partie basse (2) de la serre, en cas de refroidissement de cette dernière, caractérisé en ce qu'il consiste, en cas de surchauffe, à aspirer l'air chaud situé dans la dite partie haute (3) de la serre; à refroidir cet air à l'aide d'une pompe de chaleur (8), à une température inférieure de 8 à 15°C à sa température initiale; à renvoyer cet air refroidi, éventuellement additionné d'air frais, dans la même partie haute (3) de la serre vers le faîte de cette dernière d'où il a été aspiré afin de ne pas perturber sa partie basse (2), tandis que pour le réchauffage on utilise les calories récupérées par la pompe de chaleur (8) et stockées dans au moins un circuit de chauffage à basse température (12) prévu à cet effet dans la serre.

2. Procédé de réglage selon la revendication 1, caractérisé en ce qu'on détermine la surchauffe de la serre en mesurant le gradient de température entre au moins un point bas (2) et un point haut (3) de la serre (1) et en ce que l'on règle l'insufflation de l'air (5) dans la partie haute (3) de la serre en fonction de ce gradient, selon une loi déterminée expérimentalement en fonction des paramètres propres à la serre (1) considérée.

3. Procédé selon l'une des revendications précédentes, caractérisé en ce que, la serre étant du type équipé d'un voile d'ombrage (4), on déploie ce voile avant ladite insufflation effectuée au-dessus de ce voile.

4. Installation pour la mise en oeuvre du procédé selon l'une ou plusieurs des revendications 1 à 3, du type comprenant un dispositif d'insufflation d'air (5, 6) situé ou aboutissant dans le faîte de la partie haute (3) de la serre telle que définie dans la revendication 1; un moyen d'aspiration de l'air aspirant éventuellement l'air de l'extérieur (9); positif de refroidissement (8) de l'air avant son insufflation; un circuit de chauffage basse temperature (12) chauffant la partie basse (2) de la serre; et un dispositif de réglage auquel peut être asservi ledit dispositif d'insufflation (5, 6) en fonction au moins de la température dans la serre, caractérisé en ce qu'elle comprend, en outre, des moyens d'aspiration (7) de l'air situé dans ladite partie haute de la serre, un dispositif de refroidissement de l'air aspiré par cesdits moyens d'aspiration (7), ce dispositif étant constitué d'une pompe à chaleur air/eau (8), une bâche à eau (10) étant prévue pour le stockage de l'eau réchauffée au cours de fonctionnement de ladite pompe (8), cette bâche (10) étant connectée à tout ou partie du circuit de chauffage (12) et en ce que la dispositif de refroidissement peut être aussi asservi au dispositif de réglage.

5. Installation selon la revendication 4, caractérisée en ce que le retour du circuit de la bâche (10) est arrangé pour être stocké, au moins en partie, dans une bâche (18) pour servir ultérieurement comme eau d'arosage.

6. Installation selon la revendication 4, caractérisée en ce que ladite pompe à chaleur (8) est entraînée par un moteur thermique (11), dont le circuit de refroidissement propre est relié à ladite bâche (10) et/ou à une deuxième bâche d'eau (18) connectée à tout ou partie du circuit usuel (12) de chauffage de la serre équipée.

7. Installation selon la revendication 6, destinée à équiper une serre (1) pourvue d'un voile d'ombrage (4) à commande motorisée, caractérisée en ce que la commande dudit voile est asservie audit dispositif de pilotage.

**Patentansprüche**

1. Temperaturregelungsverfahren in einem Gewächshaus mit Hilfe von gekühlter Luft im oberen Teil (3) des Gewächshauses, d. h. dem oberen Teil des Innenvolumens des Gewächshauses über der Kultur, im Falle einer Überhitzung und mit Hilfe von Erwärmung des unteren Teils (2) des Gewächshauses im Falle einer Abkühlung des letzteren, gekennzeichent dadurch, daß es im Falle einer Überhitzung die warme Luft im erwähnten oberen Teil (3) des Gewächshauses absaugt; diese Luft mit Hilfe einer Wärmepumpe (8) abkühlt bis zu einer Temperatur, die 9 bis 15° unterhalb der Anfangstemperatur liegt; diese gekühlte Luft, gegebenenfalls mit einem Frischluftzusatz in denselben oberen Teil (3) zurückbläst in die Richtung des Giebels, aus dem sie abgesaugt wurde, so daß der untere Teil (2) nicht gestört wird, während man für die Erwärmung die wiedergewonnenen Kalorien der Wärmepumpe (8) benutzt, die mindestens in einem Heizfadenstromkreis mit niedriger Temperatur (12) gespeichert werden.

2. Regelungsverfahren gemäß 1, gekennzeichnet dadurch, daß man die Erhitzung des Gewächshauses bestimmt, indem man das Temperaturgefälle zwischen mindestens einem unteren Punkt (2) und einem oberen Punkt (3) des Gewächshauses (1) bestimmt und indem man die Lufteinblasung (5) im oberen Teil (3) des Gewächshauses regelt gemäß diesem Gefälle, laut einem experimentell festgestellten Gesetz abhängig von den eigenen Parametern des betreffenden Gewächshauses (1).

3. Verfahren gemäß einem der höher erwähnten Ansprüche, gekennzeichnet dadurch, daß wenn das Gewächshaus ein mit einem Vorhang (4) ausgestatteter Typ ist, man den Vorhang vor dem Einblasen, das über diesem Vorhang stattfindet, aufspannt.

4. Anlage für Inbetriebnahme des Verfahrens gemäß einer oder mehrerer der Ansprüche 1 bis 3, des Typs mit einer Gebläsevorrichtung (5, 6) im Giebel oder mit Ausgang im Giebel des oberen Teils (3) des Gewächshauses wie unter 1; eine Absaugvorrichtung, die gegebenenfalls Außenluft absaugt (9); eine Kühlanlage (8) für die Luft vor dem Einblasen; ein Heizfadenstromkreis niedriger Temperatur (12) für die Heizung des unteren Teils (2) des Gewächshauses; und eine Regelungsvorrichtung mit der die erwähnte Einblasungsvorrichtung (5, 6) abhängig von mindestens der Temperatur im Gewächshaus verbunden werden kann, dadurch gekennzeichnet, daß sie außer den Absaugvorrichtungen (7) für die Luft im erwähnten oberen Teil des Gewächshauses eine Kühlvorrichtung für die Luft der erwähnten Absaugvorrichtung (7) enthält, die besteht aus einer Wärmepumpe Luft/Wasser (8); ein Wasserbehälter (10) ist vorgesehen für die Speicherung des im Laufe des Betriebs der höher erwähnten Pumpe (8) erwärmten Wassers, dieser Behälter (10) ist ganz oder teilweise verbunden mit dem Heizfadenstromkreis (12) und außerdem ist sie dadurch gekennzeichnet, daß die Kühlvorrichtung mit der Regelungsvorrichtung verbunden werden kann.

5. Anlage gemäß 4, gekennzeichnet dadurch, daß der Rückfluß des Behälterkreises (10) so ausgestattet ist, daß er jedenfalls teilweise gespeichert werden kann in einem Behälter (18) um später als Berieselungswasser verwendet zu werden.

6. Anlage gemäß 4, gekennzeichnet dadurch, daß die besagte Wärmepumpe (8) von einem thermischen Motor angetrieben wird (11), dessen eigener Kühlkreis mit dem besagten Behälter (10) verbunden ist und/oder mit einem zweiten Wasserbehälter (18), der mit dem ganzen oder einem Teil des gebräuchlichen Heizkreises (12) des Gewächshauses verbunden ist.

7. Anlage gemäß 6 für die Ausstattung eines Gewächshauses (1) mit einem motorgesteuerten Vorhang (4), gekennzeichnet dadurch, daß der Antrieb des besagten Vorhangs mit der besagten Steuerungsvorrichtung verbunden ist.

## Claims

1. Procedure for the control of the temperature in a greenhouse by blowing cool air into the upper part (3) of the greenhouse, that is to say, the high part of the inside volume of the greenhouse which covers the growing area, in the event of overheating, and by heating the lower part (2) of the greenhouse, in the event of the cooling of the latter, with the distinguishing feature, that in the event of overheating, the hot air situated in the said upper part (3) of the greenhouse is drawn in; that this air is cooled by means of a heat pump (8), to a temperature 9° to 15° lower than its initial temperature; to return this cooled air, to which fresh air may possibly be addes, to the same upper part (3) of the greenhouse (directed) towards the ridge of the latter from where it is drawn in order not to disturb the lower part (2), while for reheating the heat recovered by the heat pump (8) and stored in at least one central heating circuit heating circuit at a low temperature (12) provided in the greenhouse for this purpose.

2. Control procedure in accordance with claim 1, with the distinguishing feature that the overheating of the greenhouse is determined by measuring the temperature gradient between at least one low point (2) and a high point (3) in the greenhouse (1) and that the blowing of air (5) into the upper part of the greenhouse is controlled in relation to this gradient, according to a law determined experimentally in relation to the parameters of the greenhouse (1) itself.

3. Procedure in accordance with the above claim, with the distinguishing feature that when the greenhouse is of the type equipped with a shadow blind (4), this blind should be drawn before the said blowing-in is carried out under this blind.

4. Installation for the implementation of the procedure according to one or more of claims 1 to 3, of such a nature that it comprises a device for blowing in air (5, 6) situated or adjacent to the ridge in the upper part (3) of the greenhouse as described in claim 1; a means of withdrawing the air which perhaps draws air from the outside (9); a cooling device (8) for the air prior to it being blown in; a low-temperature central heating circuit (12) heating the lower part of the greenhouse; and a control device to which the said blowing-in device may be subject (5, 6) at least in relation to the temperature in the greenhouse, with the distinguishing feature that it comprises, among other things, the means of drawing in (7) the air located in the said upper part of the greenhouse, a device for cooling the air drawn in by these means of drawing-in (7), this device being composed of an air/water heat pump (8), a water cistern (10) being provided for the storage of the water heated while the said pump is in operation (8), this cistern (10) being connected to all or part of the heating circuit (12) and that the cooling device can also be subject to the control device.

5. Installation according to claim 4, with the distinguishing feature that the return of the circuit of the cistern (10) is arranged so that it can be stocked, at least in part, in a container (18) to serve later on as sprinkling water.

6. Installation according to claim 4, with the distinguishing feature that the said heat pump (8) is driven by a heat engine (11), the cooling circuit of which is connected to the said cistern 10 and/or to a second cistern (18) connected to all or part of the normal central heating circuit (12) of the greenhouse so equipped.

7. Installation according to claim 6, intended for installation in a greenhouse (1) provided with a power shadow blind (4), with the feature that the control of the said blind is subject to the said control device.

0 072 834

*Fig.1*

*Fig.2*